# EUROPEAN PATENT SPECIFICATION

(11) **EP 2 716 940 B1**
(45) Date of publication and mention of the grant of the patent: **17.05.2017**
(21) Application number: 11866563.7
(22) Date of filing: 27.05.2011
(51) Int. Cl.: F16H 63/10, F16H 63/20, F16H 63/36, F16H 63/34, F16H 63/30

(54) **OPERATING MECHANISM FOR MANUAL TRANSMISSION FOR VEHICLE**
BETÄTIGUNGSMECHANISMUS FÜR HANDSCHALTGETRIEBE FÜR EIN FAHRZEUG
CHAÎNE CINÉMATIQUE POUR BOÎTE DE VITESSES MANUELLE DE VÉHICULE

(43) Date of publication of application: 09.04.2014
(73) Proprietor: TOYOTA JIDOSHA KABUSHIKI KAISHA, Toyota-shi, Aichi-ken, 471-8571 (JP)
(72) Inventor: SAKAI Takaki, Toyota-shi, Aichi-ken, 471-8571 (JP); YASUE Yuko, Toyota-shi, Aichi-ken, 471-8571 (JP)
(74) Representative: Smith, Samuel Leonard
(86) International application number: PCT/JP2011/062236
(87) International publication number: WO 2012/164646

(56) References cited:
- EP-A1- 0 293 288
- EP-A1- 2 180 213
- JP-A- 2007 132 358
- JP-A- 2010 101 429
- JP-U- 60 091 844

## Description

### TECHNICAL FIELD

The present invention relates to a shifting mechanism of a vehicular manual transmission, and more particularly to an improvement of ease of operation of the shifting mechanism upon a diagonal shifting operation for a shift-down action from a highest-speed position.

### BACKGROUND ART

There is known a shifting mechanism of a vehicular manual transmission configured to establish a selected speed position by moving a selected shifter fork in the axial direction in synchronization of a shifting operation of a manual shift lever following a selecting operation of the manual shift lever. Regarding the shifting mechanism of this type of manual transmission, there have been proposed techniques for improving the ease of operation of the manual shift lever. Patent Document 1 discloses an example of such a manual transmission. According to the technique disclosed in this publication, the manual transmission is provided with a mechanism for applying a force to a synchronizer sleeve when the synchronizer sleeve is stopped at its substantially neutral position following its movement toward a stopper with a shifting force generated by the manual shift lever for a shifting action from a once established speed position to a neutral position, so that the movement of the synchronizer sleeve toward the stopper is limited by the mechanism to hold the synchronizer sleeve at its substantially neutral position. This mechanism makes it possible to effectively prevent an interrupted or disturbed movement of the manual shift lever in the selecting direction following the movement in the shifting direction.

### PRIOR ART DOCUMENTS

### Patent Documents

Patent Document 1: JP-2010-101429 A , disclosing all the features of the preamble of claim 1.
Patent Document 2: JP-5-42824 Y2

### SUMMARY OF THE INVENTION

### Object Achieved By The Invention

By the way, a speed-position selecting operation of the manual shift lever of the above-described manual transmission between two speed-positions to be established at respective different positions in the selecting direction and by shifting operations in respective opposite shifting directions is generally called "a diagonal shifting operation". An operation of the shift lever for a shift-down action from a fifth-speed position, which is the highest-speed position, to a fourth-speed position is an example of the diagonal shifting operation. During a selecting operation in this diagonal shifting operation for the shift-down action from the highest-speed position, a shifter head held in engagement with an inner lever in a shift stopper mechanism may suffer from overshooting by a slight distance in the shifting direction for the shifting (releasing) action from the fifth-speed position. In the event of this overshooting, a movement of an interlocking member in the selecting direction may be interrupted or disturbed by a force transmitted from the interlocking member to a fifth-speed header portion and a force transmitted from the inner lever to the fifth-speed header portion, whereby the ease of shifting operation of the manual shift lever may be deteriorated. Thus, the prior art technique does not permit sufficient prevention of deterioration of the ease of shifting operation. In this respect, there has been a need for development of a shifting mechanism of a vehicular manual transmission which has an improved ease of operation upon the diagonal shifting operation for the shift-down action from the highest-speed position.

The present invention was made in view of the background art described above. It is therefore an object of the present invention to provide a shifting mechanism of a vehicular manual transmission which has an improved ease of operation upon a diagonal shifting operation for a shift-down action from the highest-speed position.

### Means For Achieving The Object

The object indicated above is achieved according to the principle of the present invention, which provides a shifting mechanism of a vehicular manual transmission having a highest "n"th-speed position and configured to perform a shift-down action from the above-described "n"th-speed position to an "n-1"th-speed position upon a diagonal shifting operation of a manual shift lever, the shifting mechanism comprising: a selector lever operatively connected to the above-described manual shift lever and operable to at least two selecting positions; a shifter lever operatively connected to the above-described manual shift lever and operable to a neutral position and two operating positions on respective opposite sides of the neutral position; a plurality of shifter fork shafts each of which is provided with an integrally formed shifter fork and an integrally formed shifter head, the above-described shifter fork shafts being disposed so as to extend in parallel with a shifter/selector shaft such that the shifter fork shafts are axially movable and such that the shifter heads of the shifter fork shafts are located along an arc about an axis of the above-described shifter/selector shaft; an inner lever fixed to the above-described shifter/selector shaft and movable in an axial direction of the shifter/selector shaft, in synchronization of a shifting operation of the above-described shifter lever, to axially move the above-described shifter fork shafts; and an interlocking member supported by the above-described shifter/selector shaft such that the interlocking member is axially movable and rotatable relative to the shifter/selector shaft, the above-described interlocking member being pivoted in synchronization with an operation of the above-described selector lever to a selected one of the selecting positions, to pivot the above-described inner lever to a selected angular position at which the inner lever is held in engagement with the shifter head of a selected one of the above-described plurality of shifter fork shafts, the above-described interlocking member permitting the above-described inner lever to be moved in the axial direction of the shifter/selector shaft and being configured to lock each of the shifter heads not in engagement with the above-described inner lever, at a neutral position thereof; the above-described shifting mechanism being characterized in that the shifter head which is to be moved to select the above-described "n"th-speed position of the above-described manual transmission at the selecting position corresponding to the "n"th-speed position partially overlaps the above-described interlocking member in a direction of pivoting of the interlocking member.

### Advantages Of The Invention

According to the shifting mechanism of the vehicular manual transmission, the shifter head which is to be moved to select the "n"th-speed position of the above-described manual transmission at the selecting position corresponding to the "n"th-speed position partially overlaps the above-described interlocking member in the direction of pivoting of the interlocking member, so that the above-indicated shifter head is stopped at the above-indicated neutral position, by its portion overlapping the above-described interlocking member, during the shifting operation for the shift-down action from the "n"th-speed position, making it possible to prevent the overshooting of the shifter head held in engagement with the inner lever, in the direction of shifting for the shift-down action from the above-described "n"th-speed position, and to thereby effectively prevent the interrupted or disturbed movement of the interlocking member in the direction of the selecting operation, after the overshooting. Namely, the present invention provides a shifting mechanism of a vehicular manual transmission, which has an improved ease of operation upon a diagonal shifting operation for a shift-down action from the highest-speed position.

### BRIEF DESCRIPTION OF THE DRAWINGS

Fig. 1 is an overall view for explaining an example of a shifting mechanism of a vehicular manual transmission according to one preferred embodiment of this invention;
Fig. 2 is a perspective view of a construction of a portion of the shifting mechanism of the manual transmission of Fig. 1 around an inner lever;
Fig. 3 is a view of the inner lever and an interlocking member of Fig. 2, taken in the direction parallel to an axis of a shifter/selector shaft;
Fig. 4 is a side elevational view of the manual transmission of Fig. 1 taken in a direction parallel to the direction of its axis;
Fig. 5 is a schematic view showing a pattern of a shift gate of a shift switching device for selecting shift positions of the manual transmission of Fig. 1;
Fig. 6 is a view showing a positional relationship of an engaging portion and other portions of the shifting mechanism of the manual transmission of Fig. 1 upon a shift-down action of the shifting mechanism from a fifth-speed position to a fourth speed position;
Fig. 7 is a view showing another positional relationship of the engaging portion and other portions of the shifting mechanism of the manual transmission of Fig. 1 upon the shift-down action of the shifting mechanism from the fifth-speed position to the fourth speed position;
Fig. 8 is a view showing another positional relationship of the engaging portion and other portions of the shifting mechanism of the manual transmission of Fig. 1 upon the shift-down action of the shifting mechanism from the fifth-speed position to the fourth speed position;
Fig. 9 is a view showing a further positional relationship of the engaging portion and other portions of the shifting mechanism of the manual transmission of Fig. 1 upon the shift-down action of the shifting mechanism from the fifth-speed position to the fourth speed position;
Fig. 10 is a view showing another positional relationship of the engaging portion and other portions of the shifting mechanism of the manual transmission of Fig. 1 upon the shift-down action of the shifting mechanism from the fifth-speed position to the fourth speed position;
Fig. 11 is a view showing a further positional relationship of the engaging portion and other portions of the shifting mechanism of the manual transmission of Fig. 1 upon the shift-down action of the shifting mechanism from the fifth-speed position to the fourth speed position;
Fig. 12 is a view for explaining difficulty of operation of a shifting mechanism of a prior art manual transmission due to overshooting upon a shift-down action of the shifting mechanism from the fifth-speed position to the fourth-speed position;
Fig. 13 is a view for explaining the difficulty of operation of the shifting mechanism of the prior art manual transmission due to overshooting upon the shift-down action of the shifting mechanism from the fifth-speed position to the fourth-speed position;
Fig. 14 is a perspective view of a third shifter fork shaft of the shifting mechanism of the prior art manual transmission, for explaining a difference of the present embodiment with respect to the prior art;
Fig. 15 is a perspective view of a third shifter fork shaft of the shifting mechanism of the manual transmission of the present embodiment, for comparison with the prior art third shifter fork shaft shown in Fig. 14;
Fig. 16 is a view for explaining a structure for prevention of the overshooting upon the shift-down action of the shifting mechanism of the manual transmission of the present embodiment from the fifth-speed position to the fourth-speed position, and consequent reduction of the difficulty of operation of the shifting mechanism;
Fig. 17 is a view for explaining the structure for prevention of the overshooting upon the shift-down action of the shifting mechanism of the manual transmission of the present embodiment from the fifth-speed position to the fourth-speed position, and the consequent reduction of the difficulty of operation of the shifting mechanism; and
Fig. 18 is a view for explaining the structure for prevention of the overshooting upon the shift-down action of the shifting mechanism of the manual transmission of the present embodiment from the fifth-speed position to the fourth-speed position, and the consequent reduction of the difficulty of operation of the shifting mechanism.

### MODE FOR CARRYING OUT THE INVENTION

In other words, the present invention is applicable to a shifting mechanism of a vehicular manual transmission which has a highest "n"th-speed position and which is shifted down from the above-indicated "n"th-speed position to an "n-1"th-speed position upon a diagonal shifting operation of a manual shift lever, and wherein the dimension (thickness dimension) of the shifter head in the direction of pivoting of the interlocking member, which shifter head is to be moved by the inner lever to select the "n"th-speed position (for shifting to the "n"th-speed position), is larger than the dimension of a gap formed in the interlocking member to permit the inner lever to be moved in the axial direction. In this shifting mechanism, the above-indicated shifter head is stopped at the above-indicated neutral position, by its portion overlapping the above-described interlocking member, during the shifting operation for the shift-down action from the "n"th-speed position. Namely, the shifter head functions as a stopper member for preventing the overshooting of the shifter head held in engagement with the inner lever, in the direction of shifting for the shift-down action from the "n"th-speed position, and thereby effectively preventing the interrupted or disturbed movement of the interlocking member in the direction of the selecting operation, after the overshooting.

A portion of the above-described shifter head which overlaps the above-described interlocking member in the direction of pivoting of the interlocking member at the selecting position corresponding to the above-indicated "n"th-speed position of the manual transmission preferably extends from a portion concerning shifting operation i.e., a portion of the shifter head which is to be brought into abutting contact with the above-described inner lever in the shifting direction. For reducing errors of manufacture of the various portions of the shifting mechanism, it is preferable that the shifter head per se to be moved to select the above-indicated "n"th-speed position is formed so as to partially overlap the above-described interlocking member in the direction of pivoting of the interlocking member, at the selecting position corresponding to the "n"th-speed position. However, a member formed separately from the above-indicated shifter head may be connected (fixed) to the shifter head, so that the shifter head indirectly overlaps the interlocking member in the direction of pivoting of the interlocking member, via the above-indicated member.

Preferably, the manual transmission has five forward-drive speed positions and one reverse-drive position, and is shifted down from the fifth-speed position which is the highest "n"th-speed position, to the fourth-speed position which is the "n-1"-speed position, upon a diagonal shifting operation of the manual shift lever. However, the principle of the present invention is equally applicable to any other type of manual transmission such as a manual transmission which has four selecting positions at which seven forward-drive speed positions and one reverse drive position are established.

The present invention is suitably applicable to the shifting mechanism of the manual transmission of a direct control type wherein the manual shift lever is disposed on a floor of the vehicle, in the vicinity of a vehicle operator's seat. However, the principle of the present invention is equally applicable to the shifting mechanism of a remote control type, a column shift type and any other type.

The interlocking member provided in the shifting mechanism of the manual transmission is preferably supported by the shifter/selector shaft such that the interlocking member is rotatable and axially movable relative to the shifter/selector shaft. However, the interlocking member may be splined to the shifter/selector shaft or otherwise supported by the shifter/selector shaft such that the interlocking member is not rotatable relative to the shifter/selector shaft, provided that the interlocking member is movable relative to the shifter/selector shaft in the axial direction.

### EMBODIMENT

The preferred embodiment of this invention will be described in detail by reference to the drawings.

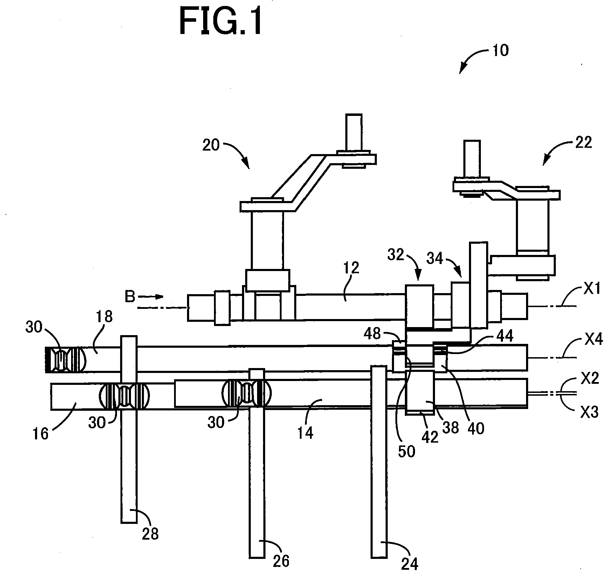

Fig. 1 is the overall view for explaining an example of a shifting mechanism of a vehicular manual transmission 10 according to one preferred embodiment of this invention. The manual transmission 10 shown in Fig. 1 has a transmission casing not shown, wherein there are provided a shifter/selector shaft 12, and three shifter fork shafts consisting of a first shifter fork shaft 14, a second shifter fork shaft 16, and a third shifter fork shaft 18.

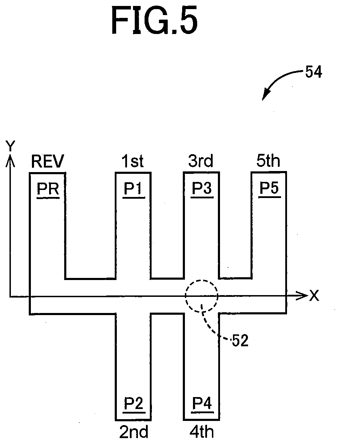

The above-indicated shifter/selector shaft 12 is supported by bearings not shown, such that the shifter/selector shaft 12 is rotatable and movable in the direction of its axis X1. This shifter/selector shaft 12 is provided with a shifter lever 20 having a neutral position and two operating positions on respective opposite sides of the neutral position, and a selector lever 22 having a plurality of operating positions. These shifter lever 20 and selector lever 22 are operatively connected to a manual shift lever 52 (shown in Fig. 5) which is manually operable by an operator of a vehicle. The above-described shifter lever 20 is operated with a shifting force applied to the manual shift lever 52 in a shifting direction, to move the above-described shifter/selector shaft 12 in the direction of its axis X1, while the above-described selector lever 22 is operated with a selecting force applied to the manual shift lever 52 in a selecting direction, to rotate the above-described shifter/selector shaft 12 about its axis X1.

The above-described first shifter fork shaft 14 is supported so as to extend in parallel with the above-described shifter/selector shaft 12, and movably in the direction of its axis X2. To this first shifter fork shaft 14, there is fixed a first shifter fork 24 engaging a sleeve of a synchronizer mechanism not shown, which is provided for shifting actions between a first-speed position and a second-speed position, and configured to transmit a drive force selectively to a gear for the first-speed position and a gear for the second-speed position. The first shifter fork 24 is axially moved in synchronization with a movement of the above-described first shifter fork shaft 14 in the direction of its axis X2, for thereby selectively establishing the first-speed and second-speed positions.

The above-described second shifter fork shaft 16 is supported so as to extend in parallel with the above-described shifter/selector shaft 12, and movably in the direction of its axis X3. To this second shifter fork shaft 16, there is fixed a second shifter fork 26 engaging a sleeve of a synchronizer mechanism not shown, which is provided for shifting actions between a third-speed position and a fourth-speed position, and configured to transmit a drive force selectively to a gear for the third-speed position and a gear for the fourth-speed position. The second shifter fork 26 is axially moved in synchronization with a movement of the above-described second shifter fork shaft 16 in the direction of its axis X3, for thereby selectively establishing the third-speed and fourth-speed positions.

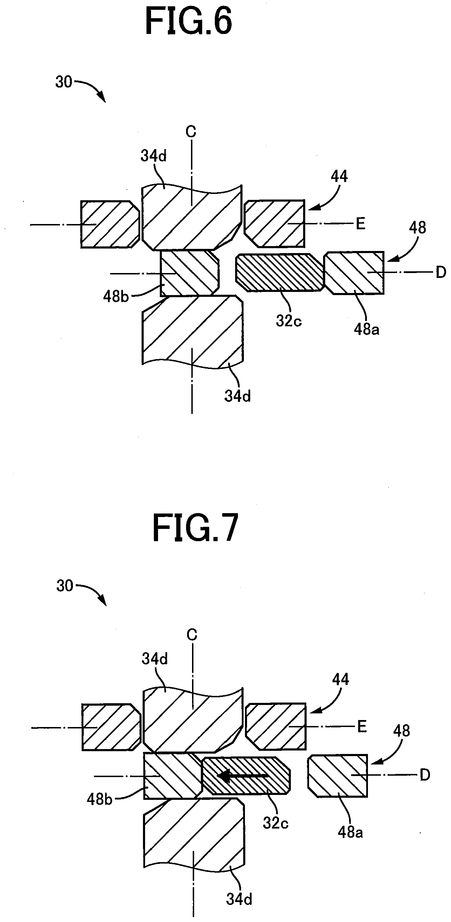

The above-described third shifter fork shaft 18 is supported so as to extend in parallel with the above-described shifter/selector shaft 12, and movably in the direction of its axis X4. To this third shifter fork shaft 18, there is fixed a third shifter fork 28 engaging a sleeve of a synchronizer mechanism not shown, which is provided for a shifting action to a fifth-speed position, and configured to transmit a drive force selectively to a gear for the fifth-speed position. The third shifter fork 28 is axially moved in synchronization with a movement of the above-described third shifter fork shaft 18 in the direction of its axis X4, for thereby selectively establishing the fifth-speed position. It is noted that each of the first shifter fork shaft 14, second shifter fork shaft 16 and third shifter fork shaft 18 is preferably provided with an axial-movement preventive mechanism (shift check mechanism) for locking the shifter fork shaft 14, 16, 18 at the predetermined axial position or positions corresponding to the speed-position or positions and for maintaining the selectively established speed position. This axial-movement preventive mechanism includes a ball or balls, and a spring or springs each of which applies a biasing force to the corresponding ball for pressing the ball into a groove or one of grooves, which groove or grooves is/are formed in the shifter fork shaft 14, 16, 18. In addition, the shifting mechanism of the above-described manual transmission 10 is provided with shift stopper mechanisms 30 shown in Figs. 6-11 referred to below, which are configured to maintain meshing of the gears for the once established speed-position and to prevent meshing of the other gears for any other speed position.

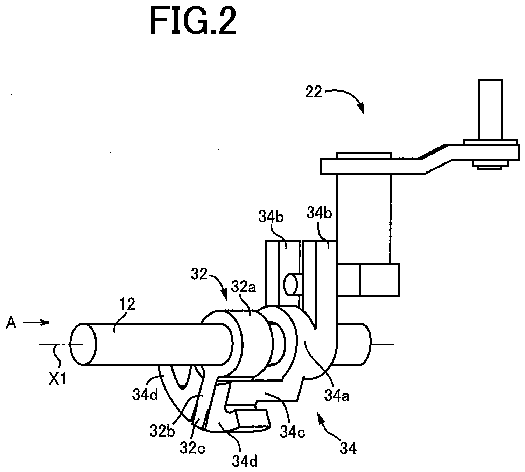

The above-described shifter/selector shaft 12 is provided with an inner lever 32 for moving a selected one of the above-described first, second and third shifter fork shafts 14, 16, 18 in the axial direction. Fig. 2 is the perspective view of a construction of a portion of the shifting mechanism of the manual transmission 10 of Fig. 1 around the inner lever 32. As shown in Fig. 2, the above-indicated inner lever 32 is mounted on the above-described shifter/selector shaft 12 such that the inner lever 32 is not rotatable relative to the shifter/selector shaft 12 and is immovable relative to the shifter/selector shaft 12 in the direction of the axis X1. The inner lever 32 is provided with: a cylindrical portion 32a fixedly fitted on the outer circumferential surface of the shifter/selector shaft 12; a radial projection 32b which projects from the outer circumferential surface of the cylindrical portion 32a in the radial direction and which extends longitudinally in the direction of the axis X1; and an engaging portion 32c which projects from the distal end (outer radial end) of the radial projection 32b, with a smaller thickness than the radial projection 32b in the circumferential direction of the cylindrical portion 32a, and extends longitudinally in the direction of the axis X1, like the radial projection 32b.

The above-described shifter/selector shaft 12 is further provided with an interlocking member 34 for sliding contact with opposite surfaces of the above-indicated radial projection 32b which are opposite to each other in the circumferential direction of the cylindrical portion 32a. This interlocking member 34 is provided with: a cylindrical portion 34a fitted on the above-described shifter/selector shaft 12 such that the cylindrical portion 34a is rotatable relative to the shifter/selector shaft 12 about the axis X1 and movable relative to the shifter/selector shaft 12 in the direction of the axis X1; a pair of rotation transmitting portions 34b extending in parallel with each other from circumferentially opposite portions of the outer circumferential surface of the cylindrical portion 34a; sliding portions 34c which extend from the cylindrical portion 34a in the axial direction of the cylindrical portion 34a, and which are provided for sliding contact with the above-indicated opposite surfaces of the radial projection 32b of the above-described inner lever 32; and a pair of guiding portions 34d which project from the respective sliding portions 34c in the radial direction of the cylindrical portion 34a and extend in the circumferential direction of the cylindrical portion 34a. These guiding portions 34d have an axial dimension substantially equal to the dimension of the engaging portion 32c of the above-described inner lever 32 in the direction of the axis X1. A gap is provided in the direction of the axis X1 between the cylindrical portion 32a of the above-described inner lever 32 and the cylindrical portion 34a of the interlocking member 34, to permit the inner lever 32 to be moved in the opposite directions along the axis X1.

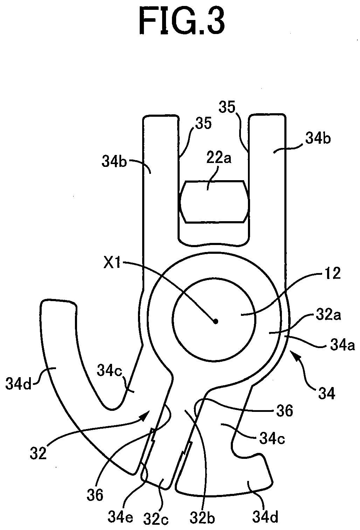

Fig. 3 is the view of the inner lever 32 and the interlocking member 34 of Fig. 2, taken in the direction of an arrow A parallel to the axis X1 of the shifter/selector shaft 12. As shown in Fig. 3, the above-described selector lever 22 is provided with a selector inner lever portion 22a which is interposed (inserted) between the pair of mutually opposed rotation transmitting portions 34b of the above-described interlocking member 34 The interlocking member 34 is pivoted about the axis of the shifter/selector shaft 12 when the above-indicated selector inner lever portion 22a is pressed against one of abutting surfaces 35 of the respective rotation transmitting portions 34b in a direction perpendicular to the abutting surfaces 35, with the selecting force applied to the above-described selector lever 22. The above-described sliding portions 34c have a pair of mutually opposed guiding surfaces 36 for sliding contact with the above-indicated opposite surfaces of the radial projection 32b. The guiding surfaces 36 function to transmit a pivotal motion of the interlocking member 34 to the above-described inner lever 32 when the pivotal motion takes place as a result of application of the selecting force to the selector lever 22. The thickness of the engaging portion 32c of the above-described inner lever 32 in the circumferential direction of the cylindrical portion 32a is smaller than that of the above-described radial projection 32b, and a gap 34e formed between the guiding portions 34d to receive the engaging portion 32c of the inner lever 32 has a larger dimension than a gap between the mutually opposed guiding surfaces 36.

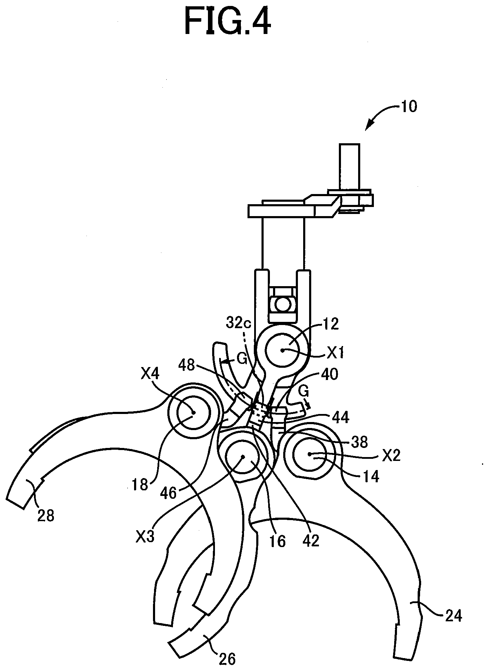

Fig. 4 is the side elevational view of the manual transmission 10 of Fig. 1 taken in the direction of an arrow B parallel to the axis X1. As shown in Fig. 4, each of the above-described first shifter fork 24, second shifter fork 26 and third shifter fork 28 has an arcuate inner surface for engagement with the above-indicated sleeve not shown. A first shifter head 40 is connected through a first connecting member 38 to the above-described first shifter fork shaft 14, and a second shifter head 44 is connected through a second connecting member 42 to the above-described second shifter fork shaft 16, while a third shifter head 48 is connected through a third connecting member 46 to the above-described third shifter fork shaft 18. The first, second and third shifter heads 40, 44, 48 are located along an arc about the axis of the above-described shifter/selector shaft 12.

As shown in Fig. 1, the above-described first shifter head 40 has an engaging groove 50 which has a width sufficient for receiving the engaging portion 32c of the above-described inner lever 32, such that the opposite end faces of the engaging portion 32c as seen in the axial direction of the cylindrical portion 32a are abuttable on the corresponding inner surfaces of the engaging groove 50 of the first shifter head 40. Similarly, the above-described second shifter head 44 and third shifter head 48 have respective engaging grooves 50 (not shown in Fig. 1) having the same configuration and function as the engaging groove 50 provided in the first shifter head 40. As shown in Figs. 6-13 referred to below, the portions of the above-described first, second and third shifter heads 40, 44, 48 which define the above-indicated engaging grooves 50, the engaging portion 32c of the above-described inner lever 32, and the guiding portions 34d of the above-described interlocking member 34 are chamfered to permit the first, second and third shifter heads 40, 44, 48 to smoothly receive the engaging portion 32c of the inner lever 32 and the guiding portions 34d of the interlocking member 34.

Fig. 5 is the schematic view showing a pattern of a shift gate of a shift switching device 54 disposed on a floor of the vehicle, in the vicinity of the operator's seat, for selecting the shift positions of the manual transmission 10. As shown in Fig. 5, the shift gate of the shift switching device 54 provided for the above-described manual transmission 10 is configured to guide the manual shift lever 52 (indicated by a broken line in the figure) so that the manual shift lever 52 is movable in the direction of an X axis indicated in the figure, to perform a selecting operation, and in the direction of a Y axis perpendicular to the X axis, to perform a shifting operation.

In the shift switching device 54 shown in Fig. 5, the above-described manual transmission 10 is placed in the first-speed position which is the lowest-speed position (having the highest speed ratio), when the above-described manual shift lever 52 is operated to a position P1, and is placed in the second-speed position having a speed ratio lower than that of the first-speed position, when the manual shift lever 52 is operated to a position P2. Further, the manual transmission 10 is placed in the third-speed position having a speed ratio lower than that of the second-speed position, when the above-described manual shift lever 52 is operated to a position P3, and is placed in the fourth-speed position having a speed ratio lower than that of the third-speed position, when the manual shift lever 52 is operated to a position P4, while the manual transmission 10 is placed in the fifth-speed position which is the highest-speed position (having the lowest speed ratio), when the manual shift lever 52 is operated to a position P5. Further, the manual transmission 10 is placed in a reverse drive position when the manual shift lever 52 is operated to a position PR.

In the manual transmission 10 constructed as described above, the operation of the manual shift lever 52 to the position P3 or P4 to select the third-speed or fourth-speed position causes the selecting operation of the selector lever 22 to cause a pivotal motion of the interlocking member 34 about the axis of the shifter/selector shaft 12, and a pivotal motion of the inner lever 32 as a result of the pivotal motion of the interlocking member 34 transmitted to the inner lever 32 through the guiding surfaces 36. For selecting the third-speed or fourth-speed position, the inner lever 32 is pivoted to an angular position at which the engaging portion 32c is aligned with the second shifter head 44 of the second shifter fork shaft 16 as seen in the axial direction of the second shifter fork shaft 16, as indicated in Fig. 4, namely, at an angular position at which the engaging portion 32c is engageable with the second shifter head 44. When the inner lever 32 is moved in the direction of the axis X1 in synchronization with the shifting operation of the shifter lever 20 while the engaging portion 32c is held in engagement with the second shifter head 44, as described above, the second shifter head 44 engaging the engaging portion 32c is also moved in the direction of the axis X3, so that the second shifter fork shaft 16 and the second shifter fork 26 provided integrally with the second shifter fork shaft 16 are moved in the direction of the axis X3, in synchronization with the movement of the second shifter head 44, whereby the sleeve of the synchronizer mechanism not shown is moved to establish the third-speed or fourth-speed position.

Further, the operation of the manual shift lever 52 to the position P1 or P2 to select the first-speed or second-speed position causes the selecting operation of the selector lever 22 to cause a pivotal motion of the interlocking member 34 about the axis of the shifter/selector shaft 12, and a pivotal motion of the inner lever 32 as a result of the pivotal motion of the interlocking member 34 transmitted to the inner lever 32 through the guiding surfaces 36. For selecting the first-speed or second-speed position, the inner lever 32 is pivoted to an angular position at which the engaging portion 32c is aligned with the first shifter head 40 of the first shifter fork shaft 14 as seen in the axial direction of the first shifter fork shaft 14, namely, at an angular position at which the engaging portion 32c is engageable with the first shifter head 40. When the inner lever 32 is moved in the direction of the axis X1 in synchronization with the shifting operation of the shifter lever 20 while the engaging portion 32c is held in engagement with the first shifter head 40, as described above, the first shifter head 40 engaging the engaging portion 32c is also moved in the direction of the axis X2, so that the first shifter fork shaft 14 and the first shifter fork 24 provided integrally with the first shifter fork shaft 14 are moved in the direction of the axis X2, in synchronization with the movement of the first shifter head 40, whereby the sleeve of the synchronizer mechanism not shown is moved to establish the first-speed or second-speed position.

Further, the operation of the manual shift lever 52 to the position P5 to select the fifth-speed position causes the selecting operation of the selector lever 22 to cause a pivotal motion of the interlocking member 34 about the axis of the shifter/selector shaft 12, and a pivotal motion of the inner lever 32 as a result of the pivotal motion of the interlocking member 34 transmitted to the inner lever 32 through the guiding surfaces 36. For selecting the fifth-speed position, the inner lever 32 is pivoted to an angular position at which the engaging portion 32c is aligned with the third shifter head 48 of the third shifter fork shaft 18 as seen in the axial direction of the third shifter fork shaft 18, namely, at an angular position at which the engaging portion 32c is engageable with the third shifter head 48. When the inner lever 32 is moved in the direction of the axis X1 in synchronization with the shifting operation of the shifter lever 20 while the engaging portion 32c is held in engagement with the third shifter head 48, as described above, the third shifter head 48 engaging the engaging portion 32c is also moved in the direction of the axis X4, so that the third shifter fork shaft 18 and the third shifter fork 28 provided integrally with the third shifter fork shaft 18 are moved in the direction of the axis X4, in synchronization with the movement of the third shifter head 48, whereby the sleeve of the synchronizer mechanism not shown is moved to establish the fifth-speed position.

It is noted that the operation of the manual shift lever 52 to the position PR to select the reverse drive position causes the selecting operation of the selector lever 22 to cause a pivotal motion of a reverse drive lever not shown, for engagement with a reverse drive fork shaft not shown, so that the reverse drive fork shaft is moved in a direction parallel to the axis X1, whereby a reverse drive sleeve not shown provided in the manual transmission 10 is moved by a shifter fork provided on the reverse drive fork shaft, to establish the reverse drive position. Like the above-described inner lever 32, the reverse drive lever projects from the above-described shifter/selector shaft 12 in the radial direction.

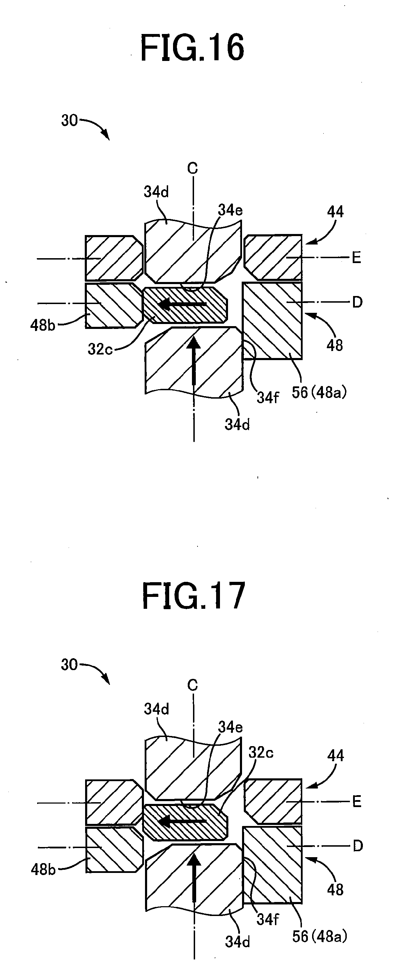

There will next be described the operations of the engaging portion 32c of the inner lever 32, the second shifter head 44, the third shifter head 48, and the guiding portions 34d of the interlocking member 34 upon a shift-down action of the manual transmission 10 constructed as described above by reference to Figs. 1-4, from the highest-speed position, that is, from the fifth-speed position to the fourth-speed position. The shifting mechanism according to the prior art will be described in detail by reference to Figs. 6-13, for comparison with the shifting mechanism according to the present embodiment described below by reference to Figs. 16-18. Since the operations to perform the shift-down action from the fifth-speed position to the fourth-speed position according to the present embodiment are basically the same as those according to the prior art, the same reference signs as used in Figs. 6-13 will be used in Figs. 16-18 to identify the common elements, which will not be described redundantly with respect to the present embodiment.

Figs. 6-13 are the cross sectional views showing sequentially established different positional relationships of the various elements of the shifting mechanism of the manual transmission 10 during the shift-down action from the fifth-speed position to the fourth-speed position, which cross sectional view is taken in the radial direction indicated by arrows G in Fig. 4, along an arc of a cylinder having the axis X1. The various elements consist of the engaging portion 32c of the inner lever 32, the second shifter head 44, the third shifter head 48, and the guiding portions 34d of the interlocking member 34 (which will be referred to simply as "engaging portion 32c and the other elements"). In these Figs. 6-13, and Figs. 16-18 referred to below, thick arrows indicate forces acting on the engaging portion 32c and the other elements as a result of the vehicle operator's "diagonal operation" of the manual shift lever 52 from the position P5 corresponding to the fifth-speed position to the position P4 corresponding to the fourth-speed position.

Fig. 6 is the view showing the positional relationship of the engaging portion 32c and the other elements when the fifth-speed position is established. When the fifth-speed position is established, the above-described engaging portion 32c is held in engagement with the third shifter head 48 located at the position corresponding to the fifth-speed position, as shown in Fig. 6. Namely, the third shifter head 48 having a pair of header portions 48a and 48b is located at the position which is spaced apart from the neutral position toward the side of the header portion 48a corresponding to the fifth-speed position. At the same time, the two guiding portions 34d are respectively held in engagement with the engaging groove 50 of the second shifter head 44 and the engaging groove 50 of the first shifter head 40 not shown, so that the second and first shifter heads 44, 40 are locked at the neutral position to prevent shifting to either one of the corresponding speed-positions. That is, the above-described inner lever 32, interlocking member 34, first shifter head 40, second shifter head 44 and third shifter head 48 cooperate to function as the shift stopper mechanisms (interlocking mechanisms or double-meshing preventive mechanisms) 30 which are configured to maintain meshing of the gears for the speed-position once established in the manual transmission 10 and to prevent meshing of the other gears for any other speed position.

For the shift-down action from the fifth-speed position to the fourth-speed position, the engaging portion 32c and the third shifter head 48 engaging the engaging portion 32c are initially returned to the neutral position in the shifting direction. Namely, the operation of the manual shift lever 52 shown in Fig. 5 from the position P5 corresponding to the fifth-speed position to the neutral position (located on the axis X indicated in Fig. 5) causes the engaging portion 32c to be moved relative to the guiding portions 34d (interlocking member 34) held stationary, away from the header portion 48a toward the header portion 48b, in the direction of a centerline D, as shown in Fig. 7, so that the engaging portion 32c presses the header portion 48b to move the third shifter head 48 relative to the guiding portions 34d in the direction of the centerline D from the side of the header portion 48a to the side of the header portion 48b (in the direction for the shift-down action from the fifth-speed position to the neutral position). It is noted that the shifting from the neutral position to the fifth-speed position is performed by the movement of the engaging portion 32c relative to the guiding portions 34d away from the header portion 48b toward the header portion 48a in the direction of the centerline D, which movement causes the engaging portion 32c to press the header portion 48a (fifth-speed header portion) and to move the third shifter head 48 relative to the guiding portions 34d in the direction of the centerline D from the side of the header portion 48b toward the side of the header portion 48a (in the direction for shifting from the neutral position to the fifth-speed position).

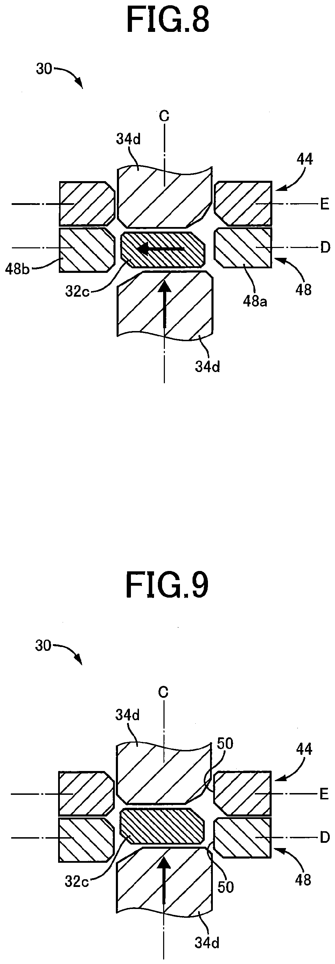

When the engaging portion 32c is located at its neutral position at which a longitudinal (widthwise) midpoint of the engaging portion 32c lies on a centerline C of the guiding portions 34d (interlocking member 34), as shown in Fig. 8, the third shifter head 48 held in engagement with the engaging portion 32c is located at its neutral position at which any speed position is established. In this condition, the guiding portions 34d are permitted to be moved (pivoted) relative to the shifter heads 44, 48, etc. in the direction of the centerline C, so that the operation of the manual shift lever 52 shown in Fig. 5 in the selecting direction (in the direction of the axis X) causes the guiding portions 34d to be moved (pivoted) relative to the shifter heads 44, 48, etc. in the direction of the centerline C, from the side of the third shifter head 48 toward the second shifter head 44, as shown in Fig. 9. At the same time, the engaging portion 32c is moved by the movement of the guiding portions 34d, away from the position of the engaging groove 50 of the third shifter head 48 to the position of the engaging groove 50 of the second shifter head 44 . Or the engaging portion 32c may be moved to a position of the engaging groove 50 of the first shifter head 40.

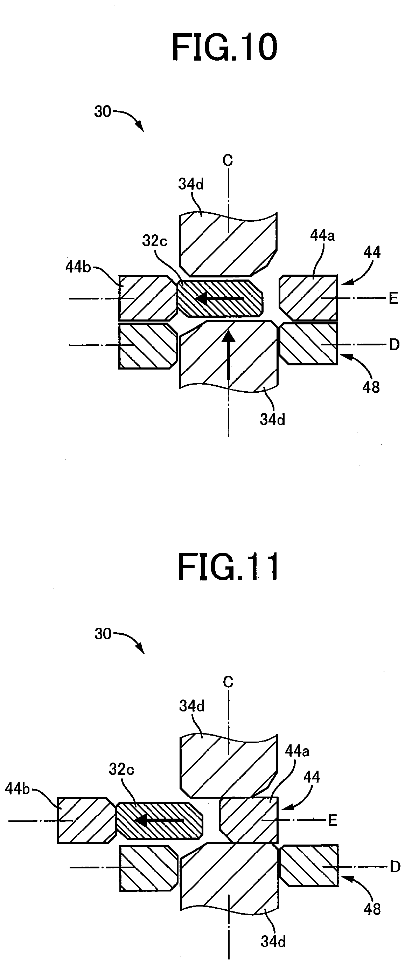

When the engaging portion 32c is located at the position of the engaging groove 50 of the second shifter head 44 (at the position at which a midpoint of the engaging portion 32c in its thickness direction (up-down direction in Fig. 10) lies on a centerline E of the second shifter head 44), as shown in Fig. 10, the engaging portion 32c is permitted to be moved relative to the guiding portions 34d in the direction of a centerline E of the second shifter head 44. In this condition, the guiding portions 34d are respectively held in engagement with the engaging groove 50 of the third shifter head 48 and the engaging groove 50 of the first shifter head 40 not shown, so that the third and first shifter heads 48, 40 are locked at the neutral position to prevent shifting to either one of the corresponding speed-positions. When the manual shift lever 52 shown in Fig. 5 is operated in this condition from the neutral position to the position P4 corresponding to the fourth-speed position, the engaging portion 32c is moved relative to the guiding portions 34d (interlocking member 34) held stationary, in the direction of the centerline E, away from a fourth-speed header portion 44b which is one of a pair of header portions 44a, 44b of the second shifter head 44, as shown in Fig. 11, so that the engaging portion 32c presses the header portion 44b to move the second shifter head 44 relative to the guiding portions 34d in the direction of the centerline E from the side of the header portion 44a to the side of the header portion 44b (in the direction for shifting from the neutral position to the fourth-speed position). In the manner described above, the shifting mechanism of the manual transmission 10 is operated to perform the shifting action from the fifth-speed position to the fourth-speed position.

Generally, a shifting action of a shifting mechanism of a manual transmission provided with the shift switching device 54 as shown in Fig. 5, between two speed-positions to be established at respective different positions in the selecting direction and by shifting operations in respective opposite directions is called "a diagonal shifting operation". Namely, a diagonal shifting action of the shifting mechanism is performed by a diagonal shifting operation of the manual shift lever 52, which consists of a movement of the manual shift lever 52 in the shifting direction from the presently established speed position to the neutral position, a subsequent movement of the manual shift lever 52 to another position in the selecting direction, and a subsequent movement of the manual shift lever 52 in the opposite shifting direction to another speed position. In the shifting mechanism of the manual transmission 10 according to the present embodiment, a shift-down action from the highest-speed position, that is, from the fifth-speed position to the fourth-speed position, for example, is performed by the diagonal shifting operation of the manual shift lever 52.

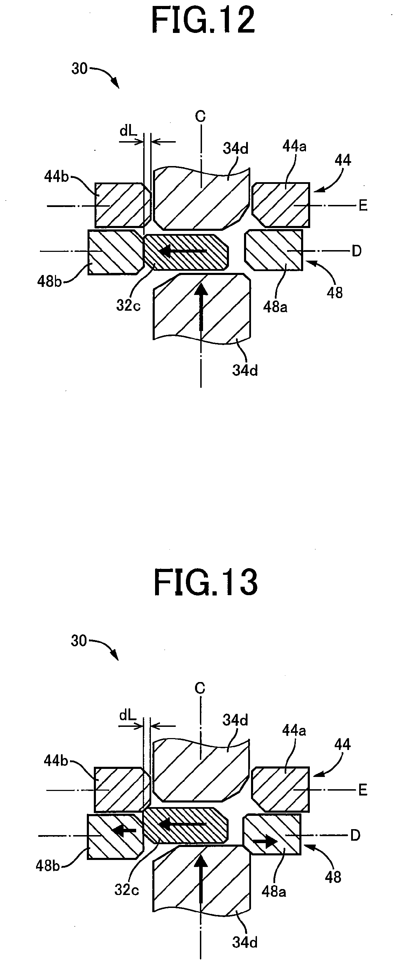

The shifting mechanism of the manual transmission 10 constructed as described above by reference to Figs. 6-11 may suffer from a problem of difficulty of operation upon the shift-down action from the fifth-speed position to the fourth-speed position by the diagonal shifting operation of the manual shift lever 52. Namely, when the manual shift lever 52 is operated for the shift-down action from the once established fifth-speed position to the neutral position (for cancellation of the fifth-speed position), the third shifter head 48 moved in engagement with the inner lever 32 (engaging portion 32c) has a risk of so-called "overshooting" by a slight distance dL in the shifting direction for canceling the fifth-speed position (for the shift-down action from the once established fifth-speed position back to the neutral position), as indicated in Fig. 12, depending upon the manner of operation of the manual shift lever 52. In the event of this overshooting, the movement of the interlocking member 34 in the selecting direction (in the direction for moving the engaging portion 32c into engagement of the second shifter head 44) may be interrupted or disturbed by forces acting on the various elements during the diagonal shifting operation.

That is, the portions of the second and third shifter heads 44 and 48 which define the engaging grooves 50 are chamfered as described above, so that the chamfered portion of one of the guiding portions 34d and the chamfered portion of the third shifter head 48 (header portion 48a) are brought into abutting contact with each other while the chamfered portion of the engaging portion 32c of the inner lever 32 and the chamfered portion of the second shifter head 44 (header portion 44b) are brought into abutting contact with each other, as shown in Fig. 13, when the selecting operation (an operation in a direction of selecting operation to move the engaging portion 32c into engagement with the second shifter head 44) is performed following the shifting operation for cancellation of the fifth-speed position to the neutral position. In this respect, it is considered that the force acting in the shifting direction (in the direction for cancellation of the fifth-speed position) still remains when the application of the force in the selecting direction is initiated during the diagonal shifting operation, so that the movement of the interlocking member 34 in the selecting direction is interrupted or disturbed by the force transmitted from the interlocking member 34 to the fifth-speed header portion, that is, to the third shifter head 48 (header portion 48a), and the force transmitted from the inner lever 32 to the third shifter head 48 (header portion 48b), whereby the ease of operation of the shifting mechanism may be deteriorated.

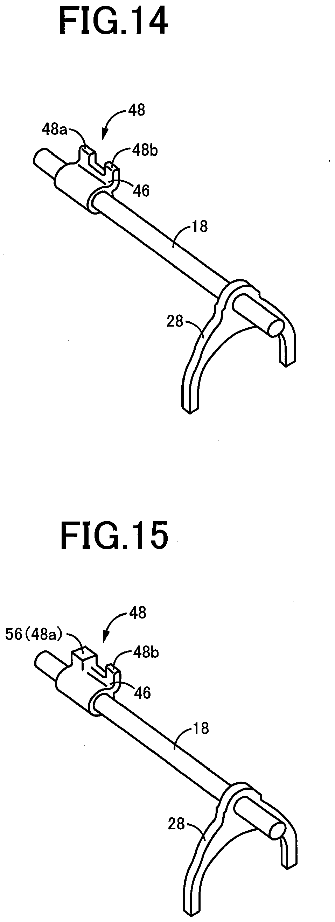

To solve the above-described problem encountered in the prior art, the shifting mechanism of the manual transmission 10 according to the present embodiment is configured to prevent occurrence of the overshooting during the shifting operation for the shift-down action from the fifth-speed position. Figs. 14 and 15 are the perspective views of the third shifter fork shaft 18, for explaining a difference of the shifting mechanism of the manual transmission 10 according to the present embodiment with respect to the shifting mechanism of the prior art. Fig. 14 shows the prior art third shifter fork while Fig. 15 shows the third shifter fork of the present embodiment.

As shown in Fig. 15, the header portion 48a of the third shifter head 48, which is the fifth-speed shifter head to be moved to select the fifth-speed position in the shifting mechanism of the manual transmission 10 according to the present embodiment has a larger dimension in the direction of the pivotal motion of the third shifter fork shaft 18 (relative to the interlocking member), than that of the header portion 48a in the prior art shown in Fig. 14, and functions as a stopper portion 56 for preventing the occurrence of overshooting of the third shifter head 48 during its movement for the shift-down action from the once established fifth-speed position. As shown in Figs. 16-18 referred to below, the stopper portion 56 is formed such that the dimension (thickness dimension) of the third shifter head 48 (header portion 48a) in the direction of the pivotal motion of the third shifter fork shaft 28 relative to the interlocking member 34, which third shifter head 48 is to be moved to select the fifth-speed position, is larger than the dimension of the gap 34e formed in the interlocking member 34 to permit the inner lever 32 to be moved in the axial direction of the cylindrical portion 32a. For reducing errors of manufacture of the various portions of the shifting mechanism, it is preferable that the stopper portion 56 is formed integrally with the third shifter head 48 at a position near a portion of the third shifter head 48 which is to be brought into abutting contact with the inner lever 32 (engaging portion 32c) (namely, the third shifter head 48 itself is formed to have a shape described above).

In other words, the stopper portion 56 is configured such that the third shifter head 48 (header portion 48a) to be moved for selecting the fifth-speed position of the manual transmission 10 at the selecting position corresponding to the fifth-speed position, and the interlocking member 34 (one of the guiding portions 34d) partially overlap each other in the direction of the pivotal motion of the interlocking member 34. That is, the header portion 48a to be moved to a position corresponding to the fifth-speed position in the selecting direction is configured to partially overlap a side surface of the guiding portion 34d of the interlocking member 34 parallel to the shifting direction, in the direction of the selecting operation.

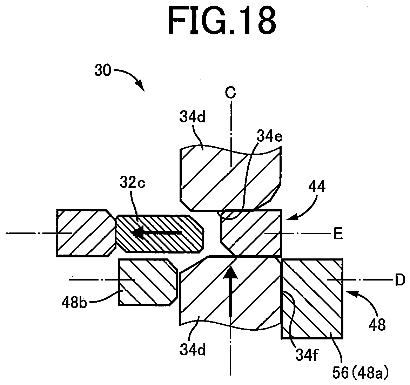

The overshooting of the third shifter head 48, namely, the movement of the third shifter head 48 into the interlocking member 34, during the shifting operation for the shift-down action from the fifth-speed position, can be effectively prevented by the stopper portion 56 which is provided so that the header portion 48a of the third shifter head 48 serving as the fifth-speed shifter head and the side surface of the guiding portion 34d of the interlocking member 34 parallel to the shifting direction partially overlap each other at the selecting position corresponding to the fifth-speed position. Namely, the shifting mechanism according to the present embodiment is configured such that when the longitudinal (widthwise) midpoint of the engaging portion 32c lies on the centerline C of the guiding portions 34d (interlocking member 34) during the shift-down action from the fifth-speed position, the fifth-speed shifter head in the form of the stopper portion 56 is brought into abutting contact with the side surface 34f of the interlocking member 34 (guiding portion 34d) on the side of the stopper portion 56, as shown in Fig. 16, whereby the movement of the third shifter head 48 into the interlocking member 34, that is, the overshooting of the third shifter head 48 can be prevented. Accordingly, it is possible to prevent the interrupted or disturbed movement of the interlocking member 34 during the shift-down action from the fifth-speed position to the fourth-speed position, which is encountered in the prior art described by reference to Figs. 12 and 13, so that the selecting operation following the shifting operation can be smoothly performed, as shown in Figs. 17 and 18. Thus, the present embodiment makes it possible to prevent the interrupted or disturbed movement of the interlocking member and improve the ease of operation of the shifting mechanism upon the diagonal shifting operation for the shift-down action from the fifth-speed position to the fourth-speed position, where these two speed-positions are to be established at the respective different positions in the selecting direction and by shifting operations in the respective opposite directions.

As described above, the present embodiment is configured such that the third shifter head 48 which is to be moved to select the highest "n"th-speed position which is the fifth-speed position of the manual transmission 10 at the selecting position corresponding to the "n"th-speed position partially overlaps the interlocking member 34 in the direction of pivoting of the interlocking member 34, so that the third shifter head 48 is stopped at the above-indicated neutral position, by its portion overlapping the interlocking member 34, during the shifting operation for the shift-down action from the fifth-speed position, making it possible to prevent the overshooting of the third shifter head 48 held in engagement with the inner lever 32, in the direction of shifting for the shift-down action from the fifth-speed position, and thereby prevent the interrupted or disturbed movement of the interlocking member 34 in the direction of the selecting operation, after the overshooting. Namely, the present embodiment provides the shifting mechanism of the vehicular manual transmission 10, which has an improved ease of operation upon the diagonal shifting operation for a shift-down action from the highest-speed position.

While the preferred embodiment of the present invention has been described in detail by reference to the drawings, it is to be understood that the invention may be embodied with various changes which may occur without departing from the scope of the appended claims.

### NOMENCLATURE OF REFERENCE SIGNS

10: Vehicular manual transmission 12: Shifter/selector shaft 14: First shifter fork shaft 16: Second shifter fork shaft 18: Third shifter fork shaft 20: Shifter lever 22: Selector lever 22a: Selector inner lever portion 24: First shifter fork 26: Second shifter fork 28: Third shifter fork 30: Shift stopper mechanisms 32: Inner lever 32a: Cylindrical portion 32b: Radial projection 32c: Engaging portion 34: Interlocking member 34a: Cylindrical portion 34b: Rotation transmitting portions 34c: Sliding portions 34d: Guiding portions 34e: Gap 35: Abutting surfaces 36: Guiding surfaces 38: First connector member 40: First shifter head 42: Second connector member 44: Second shifter head 44a, 44b: Header portions 66: Third connector member 48: Third shifter head 48a, 48b: Header portions 50: Engaging groove 52: Manual shift lever 54: Shift switching device 56: Stopper portion P1-P5, PR: Operating positions

## Claims

1. (Amended) A shifting mechanism of a vehicular manual transmission (10) having a highest "n"th-speed position and configured to perform a shift-down action from said "n"th-speed position to an "n-1"th-speed position upon a diagonal shifting operation of a manual shift lever (52), the shifting mechanism comprising:
a selector lever (22) operatively connected to said manual shift lever (52) and operable to at least two selecting positions;
a shifter lever (20) operatively connected to said manual shift lever (52) and operable to a neutral position and two operating positions on respective opposite sides of the neutral position;
a plurality of shifter fork shafts (14, 16, 18) each of which is provided with an integrally formed shifter fork (24, 26, 28) and an integrally formed shifter head (40, 44, 48), said shifter fork shafts being disposed so as to extend in parallel with a shifter/selector shaft (12) such that the shifter fork shafts are axially movable and such that the shifter heads of the shifter fork shafts are located along an arc about an axis of said shifter/selector shaft;
an inner lever (32) fixed to said shifter/selector shaft (12) and movable in an axial direction of the shifter/selector shaft, in synchronization of a shifting operation of said shifter lever (20), to axially move said shifter fork shafts; and
an interlocking member (34) supported by said shifter/selector shaft (12) such that the interlocking member is axially movable and rotatable relative to the shifter/selector shaft, said interlocking member being pivoted in synchronization with an operation of said selector lever (22) to a selected one of the selecting positions, to pivot said inner lever (32) to a selected angular position at which the inner lever is held in engagement with the shifter head of a selected one of said plurality of shifter fork shafts, said interlocking member permitting said inner lever to be moved in the axial direction of the shifter/selector shaft and being configured to lock each of the shifter heads not in engagement with said inner lever, at a neutral position thereof;
said shifting mechanism being **characterized in that**:
the shifter head (48) of one of the shifter fork shafts (14, 16, 18) which is to be moved by said inner lever (32) to select said "n"th-speed position of said manual transmission (10) at one of the selecting positions of said selector lever (22) which corresponds to the "n"th-speed position, partially overlaps said interlocking member (34) in a direction of pivoting of the interlocking member.

## Patentansprüche

1. Schaltmechanismus eines Fahrzeughandschaltgetriebes (10) mit einer höchsten "n"-ten Gangposition und eingerichtet, um einen Herunterschaltvorgang von der "n"-ten Gangposition zu einer "n-1"-ten Gangposition bei einer diagonalen Schaltbetätigung eines Handschalthebels (52) durchzuführen, der Schaltmechanismus aufweisend:
einen Wahlhebel (22), der mit dem Handschalthebel (52) betätigbar verbunden ist und zu mindestens zwei Wahlpositionen betätigbar ist;
einen Schalthebel (20), der mit dem Handschalthebel (52) betätigbar verbunden ist und zu einer neutralen Position und zwei Betätigungspositionen an jeweils entgegengesetzten Seiten der neutralen Position betätigbar ist;
eine Vielzahl von Schaltgabelwellen (14, 16, 18), von denen jede mit einer einstückig ausgebildeten Schaltgabel (24, 26, 28) und einem einstückig ausgebildeten Schaltkopf (40, 44, 48) versehen ist, wobei die Schaltgabelwellen angeordnet sind, um sich parallel zu einer Schalt-/Wahlwelle (12) zu erstrecken, so dass die Schaltgabelwellen axial bewegbar sind, und so dass die Schaltköpfe der Schaltgabelwellen entlang eines Bogens um eine Achse der Schalt-/Wahlwelle angeordnet sind;
einen Innenhebel (32), der an der Schalt-/Wahlwelle (12) befestigt ist und in einer axialen Richtung der Schalt-/Wahlwelle bewegbar ist, synchron mit einer Schaltbetätigung des Schalthebels (20), um die Schaltgabelwellen axial zu bewegen; und
ein Verriegelungselement (34), das durch die Schalt-/Wahlwelle (12) so gehalten ist, dass das Verriegelungselement axial bewegbar und bezüglich der Schalt-/Wahlwelle drehbar ist, wobei das Verriegelungselement synchron mit einer Betätigung des Wahlhebels (22) zu einer ausgewählten der Wahlpositionen schwenkbar ist, um den Innenhebel (32) zu einer ausgewählten Winkelposition zu schwenken, an der der Innenhebel in Eingriff mit dem Schaltkopf einer ausgewählten der Vielzahl von Schaltgabelwellen gehalten ist, wobei das Verriegelungselement es dem Innenhebel ermöglicht, in der Axialrichtung der Schalt-/Wahlwelle bewegt zu werden und eingerichtet ist, jeden der Schaltköpfe, die nicht in Eingriff mit dem Innenhebel sind, an deren neutraler Position zu verriegeln;
wobei der Schaltmechanismus **dadurch gekennzeichnet ist, dass**
der Schaltkopf (48) einer der Schaltgabelwellen (14, 16, 18), der durch den Innenhebel (32) bewegt werden soll, um die "n"-te Gangposition des Handschaltgetriebes (10) bei einer der Wahlpositionen des Wahlhebels (22) auszuwählen, die der "n"-ten Gangposition entspricht, das Verriegelungselement (34) in einer Schwenkrichtung des Verriegelungselements teilweise überlappt.

## Revendications

1. Mécanisme de changement de vitesse d'une transmission manuelle (10) de véhicule ayant une position de « énième » vitesse la plus haute et configuré pour réaliser une action de rétrogradage de ladite position de « énième » vitesse à une position de « n-1 » ^{ième} vitesse suite à une opération de changement de vitesse diagonal d'un levier de changement de vitesse manuel (52), le mécanisme de changement de vitesse comprenant :
un levier de sélecteur (22) raccordé de manière opérationnelle audit levier de changement de vitesse manuel (52) et pouvant être actionné au moins dans deux positions de sélection ;
un levier de sélecteur de vitesses (20) raccordé de manière opérationnelle audit levier de changement de vitesse manuel (52) et pouvant être actionné dans une position de point mort et deux positions opérationnelles sur les côtés opposés respectifs de la position de point mort ;
une pluralité d'arbres de fourchette de sélecteur de vitesses (14, 16, 18), dont chacun est prévu avec une fourchette de sélecteur de vitesses (24, 26, 28) formée de manière solidaire et une tête de sélecteur de vitesses (40, 44, 48) formée de manière solidaire, lesdits arbres de fourchette de sélecteur de vitesses étant disposés afin de s'étendre parallèlement avec un arbre de sélecteur de vitesses/sélecteur (12) de sorte que les arbres de fourchette de sélecteur de vitesses sont axialement mobiles et de sorte que les têtes de sélecteur de vitesses des arbres de fourchette de sélecteur de vitesses sont positionnés le long d'un arc autour d'un axe dudit arbre de sélecteur de vitesses/sélecteur ;
un levier interne (32) fixé sur ledit arbre de sélecteur de vitesses/sélecteur (12) et mobile dans une direction axiale de l'arbre de sélecteur de vitesses/sélecteur, en synchronisation d'une opération de changement de vitesse dudit levier de sélecteur de vitesses (20), afin de déplacer axialement lesdits arbres de fourchette de sélecteur de vitesses ; et
un élément de verrouillage (34) supporté par ledit arbre de sélecteur de vitesses/sélecteur (12) de sorte que l'élément de verrouillage est axialement mobile et rotatif par rapport au dispositif de sélecteur de vitesses/sélecteur, ledit élément de verrouillage étant pivoté en synchronisation avec une opération dudit levier de sélecteur (22) dans une position sélectionnée des positions de sélection, afin de faire pivoter ledit levier interne (32) dans une position angulaire sélectionnée à laquelle le levier interne est maintenu en mise en prise avec la tête de sélecteur de vitesses d'un arbre sélectionné de ladite pluralité d'arbres de fourchette de sélecteur de vitesses, ledit élément de verrouillage permettant audit levier interne d'être déplacé dans la direction axiale de l'arbre de sélecteur de vitesses/sélecteur et étant configuré pour ne pas verrouiller chacune des têtes de sélecteur de vitesses en mise en prise avec ledit levier interne, dans leur position de point mort ;
ledit mécanisme de changement de vitesse étant **caractérisé en ce que** :
la tête de sélecteur de vitesses (48) de l'un des arbres de fourchette de sélecteur de vitesses (14, 16, 18) qui doit être déplacée par ledit levier interne (32) pour sélectionner ladite position de « énième » vitesse de ladite transmission manuelle (10) à l'une des positions de sélection dudit levier de sélecteur (22) qui correspond à la position de « énième » vitesse, recouvre partiellement ledit élément de verrouillage (34) dans une direction de pivotement de l'élément de verrouillage.
